# EUROPÄISCHE PATENTSCHRIFT

(11) **EP 3 594 023 B1**
(45) Veröffentlichungstag und Bekanntmachung des Hinweises auf die Patenterteilung: **20.01.2021**
(21) Anmeldenummer: 19181892.1
(22) Anmeldetag: 24.06.2019
(51) Int. Cl.: B60C 11/13, B60C 11/03

(54) **FAHRZEUGLUFTREIFEN**
PNEUMATIC TYRE
PNEUMATIQUES DE VÉHICULE

(30) Priorität: 09.07.2018 DE 102018211271
(43) Veröffentlichungstag der Anmeldung: 15.01.2020
(73) Patentinhaber: Continental Reifen Deutschland GmbH, 30165 Hannover (DE)
(72) Erfinder: Tomforde, Willem, 30165 Hannover (DE); Behr, Ulrich, 30165 Hannover (DE)
(74) Vertreter: Finger, Karsten

(56) Entgegenhaltungen:
- DE-A1-102014 220 147
- JP-A- H07 164 828
- KR-B1- 100 906 564
- TW-A- 201 412 572
- US-A1- 2015 151 589
- US-B1- 6 474 381

## Beschreibung

Die Erfindung betrifft einen Fahrzeugluftreifen mit einem Laufstreifen mit zumindest einer an zumindest einer Seite von einer Umfangsrille begrenzten Profilrippe, welche über ihren Umfang mit einer Vielzahl von in die Umfangsrille einmündenden Nuten versehen ist, wobei jede Nut zur Umfangsrichtung unter einem Winkel von 5° bis 70° verläuft und wobei jede Nut durch einen Nutgrund und zwei Nutwände begrenzt ist, welche jeweils einen im Querschnitt gekrümmten radial äußeren Wandabschnitt aufweisen.

Ein Fahrzeugluftreifen der eingangs genannten Art ist beispielsweise aus der US 2015 151 589 A1 bekannt. Der Laufstreifen dieses Fahrzeugluftreifens weist gemäß einem Ausführungsbeispiel eine beidseitig von je einer Umfangsrille begrenzte Profilrippe auf, welche von einer Vielzahl von parallel zueinander sowie gerade verlaufenden Nuten durchquert ist. Die Nuten verlaufen in Draufsicht zur Umfangsrichtung unter einem Winkel größer 45°. Die Umfangsrillen und die Nuten weisen, im Querschnitt betrachtet, jeweils zueinander konkav gekrümmte Nutwände auf, um derart zu einer Erhöhung der Steifigkeit der Profilrippe beizutragen.

Aus der EP 1 619 048 A1 ein Fahrzeugluftreifen mit einem Laufstreifen bekannt, der eine im mittleren Laufstreifenbereich umlaufende Profilrippe aufweist, welche beidseitig von einer Umfangsrille begrenzt ist. Die Profilrippe ist mit Nuten versehen, welche innerhalb der Profilrippe sowie in einem geringen Abstand zu einer zentralen Umfangrille des Laufstreifens sacknutartig enden. Die Nuten verlaufen in Draufsicht kreisbogenförmig, schließen mit der Umfangsrichtung einen kleineren Winkel ein als mit der Querrichtung und sind daher Schrägnuten.

Es ist ferner üblich, die an der Laufstreifenperipherie befindlichen Kanten von Nutwänden von Nuten anzufasen. Fasen sind bekannter Weise schmale ebene Flächen, welche im Querschnitt durch die Nut unter einem Winkel von beispielsweise 35° bis 55° verlaufen. Solche Fasen sollen einem "Einrollen" der Nutkanten, beispielsweise unter Traktionsbelastung, entgegenwirken.

In Profilrippen verlaufende Nuten sorgen auf Nässe vor allem für eine gute Ableitung von Wasser in die Umfangsrillen, ihre Kanten an der Laufstreifenperipherie sollen auf trockener Fahrbahn für vor allem für gute Traktionseigenschaften sorgen. Hinsichtlich beider Eigenschaften sind herkömmlich gestaltete Nuten verbesserungsbedürftig.

Der Erfindung liegt daher die Aufgabe zugrunde, bei einem Fahrzeugluftreifen der eingangs genannten Art die Traktionseigenschaften auf trockenen Untergrund sowie das Entwässerungsvermögen auf nassem Untergrund möglichst ausgewogen weiter zu verbessern bzw. zu optimieren.

Gelöst wird die gestellte Aufgabe erfindungsgemäß dadurch, dass der radial äußere Wandabschnitt der einen Nutwand im Querschnitt konkav und der radial äußere Wandabschnitt der anderen Nutwand im Querschnitt konvex gekrümmt ist.

Der konvex gekrümmte Wandabschnitt reduziert Verwirbelungen von in die Nut einströmendem Wasser und verhindert besonders wirkungsvoll ein "Einrollen" der Nutkante unter Traktionsbelastung, vor allem auf trockenem Untergrund. Der konkav gekrümmte Wandabschnitt vergrößert das Leervolumen der Nut und bewirkt derart ein höheres Wasseraufnahmevermögen und Wasserdrainagevermögen der Nut gegenüber bekannten Nuten. Durch die erfindungsgemäße Kombination einer konkav gekrümmten Nutwand mit einer konvex gekrümmten Nutwand gelingt es somit, sowohl die Traktionseigenschaften als auch das Entwässerungsvermögen des Reifens deutlich zu verbessern.

Gemäß einer bevorzugten Ausführungsvariante reicht der radial äußere Wandabschnitt jeder Nutwand in radialer Richtung bis in eine Tiefe von 20% bis 70%, insbesondere von bis zu 50%, der Tiefe der Nut. Eine derart gestaltete Nut stellt ein für die Entwässerung der Profilrippe vorteilhaftes Leervolumen zu Verfügung, sodass die Nuten ein gutes Wasserdrainagevermögen aufweisen. Dabei bleibt eine relative hohe Steifigkeit der Profilrippe erhalten, was für die Traktionseigenschaften auf trockenem Untergrund von Vorteil ist.

Die erwähnten Effekte sind dann besonders stark ausgeprägt, wenn sich die radial äußeren Wandabschnitte über zumindest 50% der Erstreckungslänge der Nut erstrecken.

Gemäß einer weiteren bevorzugten Ausführungsvariante weist die Nut radial innerhalb der gekrümmten, radial äußeren Wandabschnitte jeweils einen radial inneren Nutabschnitt auf, dessen Breite an seiner breitesten Stelle 3,0 mm bis 6,0 mm beträgt. Über diesen Nutabschnitt wird in die Nut eingeleitetes Wasser schnell zur entsprechenden Umfangsrille weitergeleitet. Die für die Traktionseigenschaften auf trockener Fahrbahn vorteilhaft hohe Steifigkeit der Profilrippe wird durch diesen Nutabschnitt nicht beeinflusst.

Ferner ist es bevorzugt, wenn jede Nutwand einen zwischen ihrem radial äußeren Wandabschnitt und dem Nutgrund verlaufenden radial inneren Wandabschnitt aufweist, welcher in radialer Richtung oder zur radialen Richtung unter Winkel von bis zu 5° verläuft.

Wasser kann auf besonders verwirbelungsarme Weise in die Nut einströmen, wenn der radial äußere, konvex gekrümmte Wandabschnitt, im Querschnitt betrachtet, knickfrei an den radial inneren Wandabschnitt anschließt.

Gemäß einer weiteren bevorzugten Ausführungsvariante beträgt der Winkel, unter welchem die Nut zur Umfangsrichtung verläuft, mindestens 15° und weniger als 45°, vorzugsweise 20° bis 40°. Derart verlaufende Nuten sind für eine geringe Geräuschentwicklung beim Abrollen des Reifens von Vorteil.

Gemäß einer weiteren bevorzugten Ausführungsvariante verläuft der konkav gekrümmte Wandabschnitt bis zur Umfangsrille und an ist dieser durch einen konkav gekrümmten Kantenabschnitt einer Umfangsrillenkante begrenzt. Diese Maßnahme trägt vor allem zu einer verwirbelungsarmen Ableitung des Wassers in die Umfangsrille bei, wodurch insgesamt die Wasserableitung verbessert wird.

Ferner ist es bevorzugt, wenn die Krümmung des konkav gekrümmten Wandabschnittes in Richtung zum konkav gekrümmten Kantenabschnitt der Umfangsrillenkante kontinuierlich zunimmt. Eine derart gestaltete Nut weist ein gewisse "Öffnung" bzw. einen zunehmenden Nutquerschnitt in Richtung Umfangsrille auf, wodurch ebenfalls eine gute Wasserableitung unterstützt wird.

Gemäß einer weiteren bevorzugten Ausführungsvariante weist die Profilrippe am Einmündungsbereich der Nut zur Umfangsrille einen in Draufsicht spitzwinklig dreieckartigen Auslaufabschnitt auf, welcher durch den konkav gekrümmten radial äußeren Wandabschnitt mitbegrenzt ist. Auch diese Maßnahme trägt zu einer Unterstützung der Wasserableitung bei.

In diesem Zusammenhang ist es ebenfalls von Vorteil, wenn die Nut an der Einmündung zur Umfangsrille zwischen den radial äußeren Enden der radial äußeren Wandabschnitte eine Breite von 4,0 mm bis 20,0 mm, insbesondere von 6,0 mm bis 15,0 mm, aufweist.

Der konvex gekrümmte radial äußere Wandabschnitt weist in Draufsicht an seiner breitesten Stelle eine Breitenerstreckung von insbesondere 1,0 mm bis 5,0 mm auf.

Gemäß einer bevorzugten Variante verändert sich der Winkel, unter welchem die Nut in Draufsicht verläuft, über die Längserstreckung der Nut um bis zu 15°, wobei die Nut insgesamt kreisbogenartig verläuft. Durch den kreisbogenartigen Verlauf werden insbesondere Vorteile beim Abrollgeräusch erreicht, da derart verlaufende Nuten beim Durchlaufen der Bodenaufstandsfläche gegenüber gerade verlaufenden Nuten weniger "aufklappen".

Die Nut kann innerhalb der Profilrippe sacknutartig enden, wodurch die Steifigkeit der Profilrippe - im Vergleich zu einer die Profilrippe durchquerenden Nut - höher ist, wobei diese Maßnahme für die Traktionseigenschaften des Reifens auf trockenem Untergrund vorteilhaft ist.

Es ist ferner bevorzugt, wenn am innerhalb der Profilrippe liegenden Ende der Nut eine gegenüber dieser Nut in Draufsicht weniger stark zur Umfangsrichtung geneigte weitere Nut anschließt. Dadurch können dem Laufstreifen in Umfangsrichtung "langezogen" verlaufende Schrägrillen verliehen werden, welche die Entwässerung des Laufstreifens unterstützen können.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf einen Umfangsabschnitt einer Profilrippe eines Laufstreifens eines Fahrzeugluftreifens mit einer Ausführungsvariante der Erfindung,
Fig. 2 einen Schnitt entlang der Linie II-II der Fig. 1 in vergrößerter Darstellung und
Fig. 3 eine Schrägansicht auf einen Detailbereich der Profilrippe gemäß der in Fig. 1 durch den Pfeil Si angedeuteten Sichtrichtung.

Erfindungsgemäß ausgeführte Fahrzeugluftreifen sind Reifen in Radialbauart für Personenkraftwagen, Vans oder Light-Trucks sowie insbesondere Sommer- oder Ganzj ahresreifen.

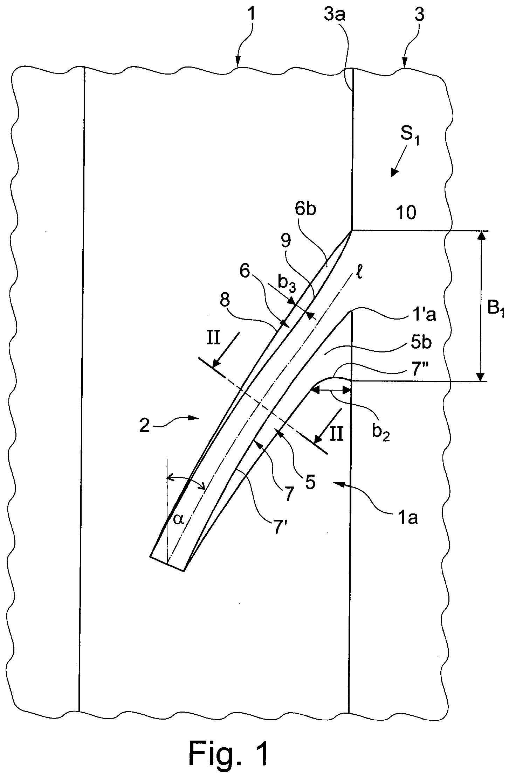

Fig. 1 zeigt schematisch und vereinfacht eine Draufsicht auf einen Umfangsabschnitt einer im mittleren Laufstreifenbereich umlaufenden Profilrippe 1 im Bereich einer Nut 2. Die Profilrippe 1 ist seitlich durch zwei in Fig. 1 lediglich angedeutete, beim gezeigten Ausführungsbeispiel in Draufsicht gerade verlaufende Umfangsrillen 3 begrenzt, wobei jede Umfangsrille 3 an der Laufstreifenperipherie zwei Umfangsrillenkanten 3a aufweist, von welchen in Fig. 1 die jeweils an der Profilrippe 1 befindliche Umfangsrillenkante 3a zu sehen ist. Die Umfangsrillen 3 sind in der für den jeweiligen Reifentyp vorgesehenen Profiltiefe ausgeführt, welche für Personenkraftwagen üblicherweise 6,5 mm bis 8,5 mm und für Vans bzw. Light-Trucks insbesondere 6,5 mm bis 13,0 mm beträgt.

In der Profilrippe 1 ist eine Vielzahl von Nuten 2 ausgebildet, welche gleichmäßig über die Umfangserstreckung der Profilrippe 1 verteilt sind, innerhalb des Profilrippe 1 sacknutartig enden und in Draufsicht leicht gebogen und bezogen auf in Nutlaufrichtung ausgerichtete Mittellinien 1 parallel zueinander verlaufen. Sämtliche Nuten 2 können in die gleiche Umfangsrille 3 einmünden. Alternativ können jedoch einige der Nuten 2 in die die Profilrippe 1 an der einen Seite begrenzende Umfangsrille 3 und die weiteren Nuten 2 in die die Profilrippe 1 an der anderen Seite begrenzende Umfangsrille 3 einmünden.

Wie Fig. 1 zeigt, verläuft die Nut 2, bezogen auf ihre Mittellinie 1, in Draufsicht zur Umfangsrichtung unter einem Winkel a von 5° bis 70°, vorzugsweise von mindestens 15° und von weniger als 45°, und besonders bevorzugter Weise von 20° bis 40°, wobei der Winkel a, ausgehend vom innerhalb der Profilrippe 1 liegenden Ende der Nut 2, in Richtung zur Einmündung der Nut 2 in die Umfangsrille 3 insbesondere um bis zu 15° kontinuierlich zunimmt. Der Winkel a ist in bekannter Weise zwischen der Umfangsrichtung und der jeweiligen an die Mittellinie 1 angelegten Tangente ermittelt. Im Bereich jeder Nut 2 weist die Profilrippe 1 einen in Draufsicht spitzwinkelig dreieckartigen Profilbereich 1a mit einer an der Einmündung der Nut 2 liegenden Spitze 1'a auf.

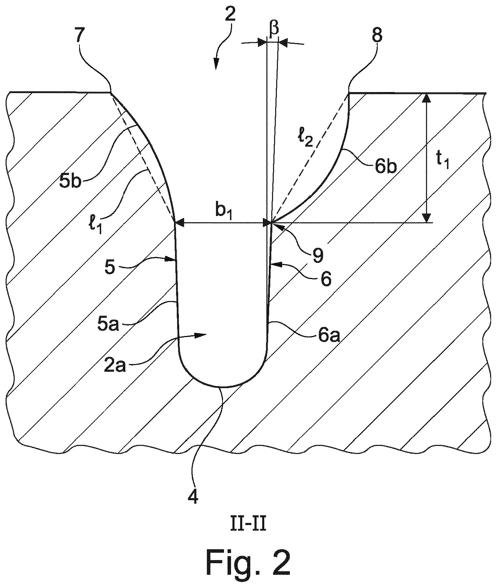

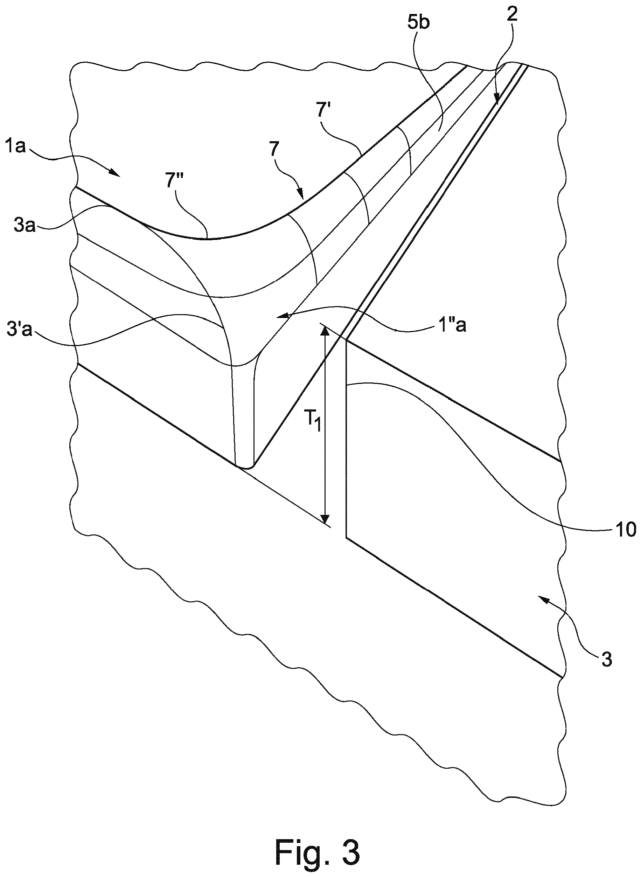

Wie Fig. 1 in Verbindung mit Fig. 2 zeigt, ist die Nut 2, im Querschnitt betrachtet, durch einen Nutgrund 4, eine die Nut 2 zum dreieckartigen Profilbereich 1a begrenzende Nutwand 5 und eine dieser gegenüberliegenden Nutwand 6 begrenzt, wobei die Nutwand 5 an der Laufstreifenperipherie an einer Nutkante 7 und die Nutwand 6 an der Laufstreifenperipherie an einer Nutkante 8 endet. Die Nut 2 weist in radialer Richtung an ihrer Einmündung zur Umfangsrille 3 eine Tiefe T₁ (Fig. 3) von 50% bis 100%, insbesondere von mindestens 70%, der Profiltiefe auf.

Gemäß Fig. 2 setzt sich die Nutwände 5, 6 jeweils aus einem an den Nutgrund 4 anschließenden radial inneren Wandabschnitt 5a bzw. 6a und einem zur Nutkante 7 bzw. 8 verlaufenden radial äußeren Wandabschnitt 5b bzw. 6b zusammen. Die radial äußeren Wandabschnitte 5b, 6b schließen in einer in radialer Richtung ermittelten übereinstimmenden Tiefe ti an die radial inneren Wandabschnitte 5a, 6a an, wobei die Tiefe ti 20% bis 70%, insbesondere bis zu 50%, der Tiefe Ti der Nut 3 beträgt. Die radial äußeren Wandabschnitte 5b, 6b können auch in unterschiedlichen Tiefen an die radial inneren Wandabschnitte 5a, 6a anschließen.

Die radial inneren Wandabschnitte 5a, 6a verlaufen, im Querschnitt betrachtet, zur radialen Richtung jeweils unter einem Winkel β von insbesondere bis zu 5° und begrenzen gemeinsam mit dem Nutgrund 4 einen radial inneren Nutabschnitt 2a der Nut 2, welcher beim gezeigten Ausführungsbeispiel zwischen den radial äußeren Enden der Wandabschnitte 5a, 6a eine Breite b₁ von 3,0 mm bis 6,0 mm aufweist. Schließen die radial äußeren Wandabschnitte 5b, 6b in unterschiedlichen Tiefen an die radial inneren Wandabschnitte 5a, 6a an, so wird die Breite b₁ am radial inneren Ende des tiefer in die Nut 2 hineinreichenden radial äußeren Wandabschnittes 5b, 6b ermittelt. Die Wandabschnitte 5a, 6a können ferner auch in radialer Richtung verlaufen sowie im Querschnitt zur radialen Richtung verschieden stark geneigt sein.

Der radial äußere Wandabschnitt 5b ist, im Querschnitt betrachtet, bezogen auf eine zwischen seinen Enden gezogene gerade Linie l₁ gemäß einer konvexen Funktion gekrümmt und schließt in der erwähnten Tiefe ti vorzugsweise knickfrei an den radial inneren Wandabschnitt 5a an. Wie in Fig. 3 durch eine Vielzahl von gestrichelten Linien angedeutet ist, nimmt die Krümmung des radial äußeren Wandabschnittes 5b, im Querschnitt betrachtet, ausgehend vom innerhalb der Profilrippe 1 befindlichen Ende der Nut 2 zur Umfangsrille 3 kontinuierlich zu und endet an der Umfangsrille 3 an einem konvex gekrümmten Kantenabschnitt 3'a der Umfangsrillenkante 3a (Fig. 3). Ausgehend vom innerhalb der Profilrippe 1 befindlichen Ende der Nut 2 nimmt die Krümmung des Wandabschnittes 5b zunächst nur geringfügig und gleichmäßig zu, sodass der Wandabschnitt 5b in diesem Bereich an der Laufstreifenperipherie von einem in Draufsicht geringfügig gebogenen Kantenabschnitt 7' der Nutkante 7 begrenzt ist (siehe auch Fig. 1). Zur Umfangsrille 3 verstärkt sich die Zunahme der Krümmung des Wandabschnittes 5b derart, dass der Wandabschnitt 5b in einem an die Umfangsrille 3 angrenzenden Bereich an der Laufstreifenperipherie durch einen zur Umfangsrillenkante 3a verlaufenden, in Draufsicht kreisbogenartig gekrümmten Kantenabschnitt 7" der Nutkante 7 begrenzt ist, welcher in axialer Richtung eine Breitenerstreckung b₂ (Fig. 1) von 2,0 mm bis 5,0 mm aufweist. Beim gezeigten Ausführungsbeispiel ist die der Krümmung des radial äußeren Wandabschnittes 5b derart ausgeführt, dass der spitzwinkelig dreieckige Profilbereich 1a am Einmündungsbereich der Nut 2 zur Umfangsrille 3 einen durch den Wandabschnitt 5b begrenzten, in Draufsicht spitzwinklig dreieckartigen, im Querschnitt abgerundeten

Auslaufabschnitt 1 "a aufweist, welcher an der Umfangsrille 3 durch den bereits erwähnten konvex gekrümmten Kantenabschnitt 3'a begrenzt ist.

Wie Fig. 2 zeigt, ist der radial äußere Wandabschnitt 6b, im Querschnitt betrachtet, bezogen auf eine zwischen seinen Enden gezogene gerade Linie l₂ gemäß einer konkaven Funktion gekrümmt und schließt in der erwähnten Tiefe ti über eine in dieser Tiefe verlaufende Kante 9 (siehe auch Fig. 1) an den radial inneren Wandabschnitt 6a an. Wie Fig. 1 zeigt, umfasst die Kante 9 einen Wendepunkt. Die Kante 9 und die Nutkante 8 enden an der Umfangsrille 3 an derselben, insbesondere abgerundeten Kante 10, welche beispielsweise in radialer Richtung orientiert ist (Fig. 1, Fig. 3). An seiner breitesten Stelle weist der radial äußere Wandabschnitt 6b in Draufsicht eine senkreckt zur Erstreckungsrichtung der Mittellinie 1 der Nut 2 ermittelte Breitenerstreckung b₃ (Fig. 1) von 1,0 mm bis 5,0 mm auf.

Gemäß Fig. 1 weist die Nut 2 an der Einmündung zur Umfangsrille 3 zwischen den radial äußeren Enden der radial äußeren Wandabschnitte 5b, 6b eine Breite Bi (Fig. 1) von 4,0 mm bis 20,0 mm, insbesondere von 6,0 mm bis 15,0 mm, auf.

Die Erfindung ist auf das beschriebene Ausführungsbeispiel nicht beschränkt Insbesondere erstrecken sich die radial äußeren, gekrümmten Wandabschnitte über zumindest 50% der entlang der Mittellinie 1 ermittelten Erstreckungslänge der Nut 2.

Die Nuten 2 können in Draufsicht bezogen auf ihre Mittellinien auch gerade und daher unter einem konstanten Winkel zur Umfangsrichtung verlaufen. Die Nuten 2 können ferner das im mittleren Laufstreifenbereich umlaufende Profilrippe 1 durchqueren. Der radial äußere konvex bzw. konkav gekrümmte Wandabschnitt verläuft zumindest über den Großteil der Erstreckung der jeweiligen Nut 2.

Ferner können in einer im mittleren Laufstreifenbereich umlaufenden Profirippe auch zwei Reihen von jeweils parallel zueinander verlaufenden Nuten 2 vorgesehen sein, wobei die Nuten 2 aus der einen Reihe in die eine die Profilrippe seitlich begrenzende Umfangsrille und die Nuten 2 aus der andern Reihe in die andere die Profilrippe seitlich begrenzende Umfangsrille einmünden. Außerdem können an die innerhalb der Profilrippe 1 befindlichen Enden der Nuten 2 weitere Nuten anschließen, welche zur Umfangsrichtung vorzugsweise weniger stark geneigt sind als die Nuten 2. In einer entsprechend breiten Profilrippe, können auch zwei Reihen jeweils aus einer Vielzahl solcher aneinander anschließender Nuten vorgesehen sein.

Profilrippen, welche Nuten 2 enthalten, können auch in den Reifenschulter verlaufen, sodass die Nuten 2 in eine die Profilrippe laufstreifeninnenseitig begrenzende Umfangsrille 1 einmünden.

Bei sämtlichen Varianten können die Umfangsrillen in Draufsicht insbesondere zumindest abschnittsweise zick-zack- oder wellenförmig verlaufen.

### Bezugszeichenliste

- 1: Profilrippe
- 1a: Profilbereich
- 1'a: Spitze
- 1"a: Auslaufabschnitt
- 2: Nut
- 2a: radial innerer Nutabschnitt
- 3: Umfangsrille
- 3a: Umfangsrillenkante
- 3'a: Kantenabschnitt
- 4: Nutgrund
- 5, 6: Nutwand
- 5a, 6a: radial innerer Wandabschnitt
- 5b, 6b: radial äußerer Wandabschnitt
- 7: Nutkante
- 7', 7": Kantenabschnitt
- 8: Nutkante
- 9: Kante
- 10: Kante
- B₁, b₁: Breite
- b₂, b₃: Breitenerstreckung
- 1: Mittellinie
- l₁, l₂: Linie
- S₁: Pfeil
- T₁, t₁: Tiefe
- α, β: Winkel

## Patentansprüche

1. Fahrzeugluftreifen mit einem Laufstreifen mit zumindest einer an zumindest einer Seite von einer Umfangsrille (3) begrenzten Profilrippe (1), welche über ihren Umfang mit einer Vielzahl von in die Umfangsrille (3) einmündenden Nuten (2) versehen ist, wobei jede Nut (2) zur Umfangsrichtung unter einem Winkel (α) von 5° bis 70° verläuft und wobei jede Nut (2) durch einen Nutgrund (4) und zwei Nutwände (5, 6) begrenzt ist, welche jeweils einen im Querschnitt gekrümmten radial äußeren Wandabschnitt (5b, 6b) aufweisen,
dadurch geknnzeichnet,
dass der radial äußere Wandabschnitt (5b) der einen Nutwand (5) im Querschnitt konvex und der radial äußere Wandabschnitt (6b) der anderen Nutwand (6) im Querschnitt konkav gekrümmt ist.

2. Fahrzeugluftreifen nach Anspruch 1, **dadurch gekennzeichnet, dass** der radial äußere Wandabschnitt (5b, 6b) jeder Nutwand (5, 6) in radialer Richtung bis in eine Tiefe (t₁) von 20% bis 70%, insbesondere von bis zu 50%, der Tiefe (T₁) der Nut (2) reicht.

3. Fahrzeugluftreifen nach Anspruch 1 oder 2, **dadurch gekennzeichnet, dass** sich die radial äußeren Wandabschnitte (5b, 6b) über zumindest 50% der Erstreckungslänge der Nut (2) erstrecken.

4. Fahrzeugluftreifen nach einem der Ansprüche 1 bis 3, **dadurch gekennzeichnet, dass** die Nut (2) radial innerhalb der gekrümmten, radial äußeren Wandabschnitte (5b, 6b) jeweils einen radial inneren Nutabschnitt (2a) aufweist, dessen Breite (b₁) an seiner breitesten Stelle 3,0 mm bis 6,0 mm beträgt.

5. Fahrzeugluftreifen nach einem der Ansprüche 1 bis 4, **dadurch gekennzeichnet, dass** jede Nutwand (5, 6) einen zwischen ihrem radial äußeren Wandabschnitt (5b, 6b) und dem Nutgrund (4) verlaufenden radial inneren Wandabschnitt (5a, 6a) aufweist, welcher in radialer Richtung oder zur radialen Richtung unter Winkel (β) von bis zu 5° verläuft.

6. Fahrzeugluftreifen nach Anspruch 5, **dadurch gekennzeichnet, dass** der radial äußere, konvex gekrümmte Wandabschnitt (5b), im Querschnitt betrachtet, knickfrei an den radial inneren Wandabschnitt (5a) anschließt.

7. Fahrzeugluftreifen nach einem der Ansprüche 1 bis 6, **dadurch gekennzeichnet, dass** der Winkel (a), unter welchem die Nut (2) zur Umfangsrichtung verläuft, mindestens 15° und weniger als 45°, vorzugsweise 20° bis 40°, beträgt.

8. Fahrzeugluftreifen nach einem der Ansprüche 1 bis 7, **dadurch gekennzeichnet, dass** der konvex gekrümmte Wandabschnitt (5b) bis zur Umfangsrille (3) verläuft und an dieser durch einen konvex gekrümmten Kantenabschnitt (3'a) einer Umfangsrillenkante (3a) begrenzt ist.

9. Fahrzeugluftreifen nach Anspruch 8, **dadurch gekennzeichnet, dass** die Krümmung des konvex gekrümmten Wandabschnittes (5b) in Richtung zum konvex gekrümmten Kantenabschnitt (3'a) der Umfangsrillenkante (3a) kontinuierlich zunimmt.

10. Fahrzeugluftreifen nach einem der Ansprüche 1 bis 9, **dadurch gekennzeichnet, dass** die Profilrippe (1) am Einmündungsbereich der Nut (2) zur Umfangsrille (3) einen in Draufsicht spitzwinklig dreieckartigen Auslaufabschnitt (1"a) aufweist, welcher durch den konvex gekrümmten radial äußeren Wandabschnitt (5b) mitbegrenzt ist.

11. Fahrzeugluftreifen nach einem der Ansprüche 1 bis 10, **dadurch gekennzeichnet, dass** die Nut (2) an der Einmündung zur Umfangsrille (3) zwischen den radial äußeren Enden der radial äußeren Wandabschnitte (5b, 6b) eine Breite (B₁) von 4,0 mm bis 20,0 mm, insbesondere von 6,0 mm bis 15,0 mm, aufweist.

12. Fahrzeugluftreifen nach einem der Ansprüche 1 bis 11, **dadurch gekennzeichnet, dass** der konkav gekrümmte radial äußere Wandabschnitt (6b) in Draufsicht an seiner breitesten Stelle eine Breitenerstreckung (b₃) von 1,0 mm bis 5,0 mm aufweist.

13. Fahrzeugluftreifen nach einem der Ansprüche 1 bis 12, **dadurch gekennzeichnet, dass** sich der Winkel (α), unter welchem die Nut (2) in Draufsicht verläuft, über die Längserstreckung der Nut (2) um bis zu 15° verändert, wobei die Nut (2) insgesamt kreisbogenartig verläuft.

14. Fahrzeugluftreifen nach einem der Ansprüche 1 bis 13, **dadurch gekennzeichnet, dass** die Nut (2) innerhalb der Profilrippe (1) sacknutartig endet.

15. Fahrzeugluftreifen nach Anspruch 14, **dadurch gekennzeichnet, dass** am innerhalb der Profilrippe (1) liegenden Ende der Nut (2) eine gegenüber dieser Nut (2) in Draufsicht weniger stark zur Umfangsrichtung geneigte weitere Nut anschließt.

## Claims

1. Pneumatic vehicle tyre comprising a tread with at least one profile rib (1), which is delimited on at least one side by a circumferential channel (3) and is provided over its circumference with a multiplicity of grooves (2) entering the circumferential channel (3), each groove (2) running in relation to the circumferential direction at an angle (α) of 5° to 70° and each groove (2) being delimited by a groove base (4) and two groove walls (5, 6), which respectively have a cross-sectionally curved radially outer wall portion (5b, 6b),
**characterized**
**in that** the radially outer wall portion (5b) of one groove wall (5) is curved convexly in cross section and the radially outer wall portion (6b) of the other groove wall (6) is curved concavely in cross section.

2. Pneumatic vehicle tyre according to Claim 1, **characterized in that** the radially outer wall portion (5b, 6b) of each groove wall (5, 6) reaches in the radial direction to a depth (t₁) of 20% to 70%, in particular of up to 50%, of the depth (T₁) of the groove (2).

3. Pneumatic vehicle tyre according to Claim 1 or 2, **characterized in that** the radially outer wall portions (5b, 6b) extend over at least 50% of the length of extent of the groove (2).

4. Pneumatic vehicle tyre according to one of Claims 1 to 3, **characterized in that** the groove (2) respectively has radially inside the curved, radially outer wall portions (5b, 6b) a radially inner groove portion (2a), the width (b₁) of which at its widest point is 3.0 mm to 6.0 mm.

5. Pneumatic vehicle tyre according to one of Claims 1 to 4, **characterized in that** each groove wall (5, 6) has, running between its radially outer wall portion (5b, 6b) and the groove base (4), a radially inner wall portion (5a, 6a), which runs in the radial direction or at an angle (β) in relation to the radial direction of up to 5°.

6. Pneumatic vehicle tyre according to Claim 5, **characterized in that** the radially outer, convexly curved wall portion (5b) adjoins the radially inner wall portion (5a) without any kinks when viewed in cross section.

7. Pneumatic vehicle tyre according to one of Claims 1 to 6, **characterized in that** the angle (α) at which the groove (2) runs in relation to the circumferential direction is at least 15° and less than 45°, preferably 20° to 40°.

8. Pneumatic vehicle tyre according to one of Claims 1 to 7, **characterized in that** the convexly curved wall portion (5b) runs up to the circumferential channel (3) and is delimited at the latter by a convexly curved edge portion (3'a) of a circumferential channel edge (3a).

9. Pneumatic vehicle tyre according to Claim 8, **characterized in that** the curvature of the convexly curved wall portion (5b) in the direction of the convexly curved edge portion (3'a) of the circumferential channel edge (3a) increases continuously.

10. Pneumatic vehicle tyre according to one of Claims 1 to 9, **characterized in that** the profile rib (1) has at the region where the groove (2) enters the circumferential channel (3) a run-out portion (1"a) which in plan view is like an acute-angled triangle and is partly delimited by the convexly curved radially outer wall portion (5b).

11. Pneumatic vehicle tyre according to one of Claims 1 to 10, **characterized in that**, where it enters the circumferential channel (3), the groove (2) has between the radially outer ends of the radially outer wall portions (5b, 6b) a width (B₁) of 4.0 mm to 20.0 mm, in particular of 6.0 mm to 15.0 mm.

12. Pneumatic vehicle tyre according to one of Claims 1 to 11, **characterized in that** the concavely curved radially outer wall portion (6b) has in plan view at its widest point a widthwise extent (b₃) of 1.0 mm to 5.0 mm.

13. Pneumatic vehicle tyre according to one of Claims 1 to 12, **characterized in that** the angle (α) at which the groove (2) runs in plan view changes over the longitudinal extent of the groove (2) by up to 15°, the groove (2) running altogether in the manner of an arc of a circle.

14. Pneumatic vehicle tyre according to one of Claims 1 to 13, **characterized in that** the groove (2) within the profile rib (1) ends in the manner of a blind groove.

15. Pneumatic vehicle tyre according to Claim 14, **characterized in that** the end of the groove (2) lying within the profile rib (1) is adjoined by a further groove, which in plan view is inclined to a lesser extent in relation to the circumferential direction.

## Revendications

1. Pneumatique de véhicule, comprenant une bande de roulement dotée d'au moins une nervure profilée (1) délimitée par une rayure circonférentielle (3) sur au moins un côté et qui est munie sur sa circonférence d'une pluralité de rainures (2) débouchant sur la rayure circonférentielle (3), chaque rainure (2) s'étendant selon un angle (α) compris entre 5° et 70° par rapport à la direction circonférentielle, et chaque rainure (2) étant délimitée par un fond de rainure (4) et deux parois de rainure (5, 6) qui présentent respectivement une partie de paroi extérieure (5b, 6b) incurvée en section transversale,
**caractérisé en ce que** la partie de paroi radialement extérieure (5b) de ladite une paroi de rainure (5) est incurvée de manière convexe en section transversale et la partie de paroi radialement extérieure (6b) de l'autre paroi de rainure (6) est incurvée de manière concave en section transversale.

2. Pneumatique de véhicule selon la revendication 1, **caractérisé en ce que** la partie de paroi radialement extérieure (5b, 6b) de chaque paroi de rainure (5, 6) atteint dans la direction radiale une profondeur (t₁) comprise entre 20 % et 70 %, en particulier allant jusqu'à 50 %, de la profondeur (T₁) de la rainure (2).

3. Pneumatique de véhicule selon la revendication 1 ou 2, **caractérisé en ce que** les parties de paroi radialement extérieures (5b, 6b) s'étendent sur au moins 50 % de la longueur d'extension de la rainure (2) .

4. Pneumatique de véhicule selon l'une quelconque des revendications 1 à 3, **caractérisé en ce que** la rainure (2) présente radialement à l'intérieur des parties de paroi radialement extérieures (5b, 6b) incurvées respectivement une partie de rainure radialement intérieure (2a) dont la largeur (b₁) à son endroit le plus large mesure entre 3,0 mm et 6,0 mm.

5. Pneumatique de véhicule selon l'une quelconque des revendications 1 à 4, **caractérisé en ce que** chaque paroi de rainure (5, 6) présente une partie de paroi radialement intérieure (5a, 6a) s'étendant entre sa partie de paroi radialement extérieure (5b, 6b) et le fond de rainure (4) et qui s'étend dans la direction radiale ou selon un angle (β) allant jusqu'à 5° par rapport à la direction radiale.

6. Pneumatique de véhicule selon la revendication 5, **caractérisé en ce que** la partie de paroi radialement extérieure (5b) incurvée de manière convexe est adjacente sans coude à la partie de paroi radialement intérieure (5a), vue en section transversale.

7. Pneumatique de véhicule selon l'une quelconque des revendications 1 à 6, **caractérisé en ce que** l'angle (α) selon lequel la rainure (2) s'étend par rapport à la direction circonférentielle est égal à au moins 15° et inférieur à 45°, de préférence compris entre 20° et 40°.

8. Pneumatique de véhicule selon l'une quelconque des revendications 1 à 7, **caractérisé en ce que** la partie de paroi (5b) incurvée de manière convexe s'étend jusqu'à la rayure circonférentielle (3) et est délimitée au niveau de celle-ci par une partie de bord (3'a) incurvée de manière convexe d'un bord de rayure circonférentielle (3a).

9. Pneumatique de véhicule selon la revendication 8, **caractérisé en ce que** la courbure de la partie de paroi (5b) incurvée de manière convexe augmente en continu en direction de la partie de bord (3'a) incurvée de manière convexe du bord de rayure circonférentielle (3a) .

10. Pneumatique de véhicule selon l'une quelconque des revendications 1 à 9, **caractérisé en ce que** la nervure profilée (1) présente à la zone de jonction de la rainure (2) une partie de sortie (1"a) en forme de triangle, à angle aigu en vue de dessus, par rapport à la rayure circonférentielle (3) et qui est également délimitée par la partie de paroi radialement extérieure (5b) incurvée de manière convexe.

11. Pneumatique de véhicule selon l'une quelconque des revendications 1 à 10, **caractérisé en ce que** la rainure (2) présente à la jonction avec la rayure circonférentielle (3) entre les extrémités radialement extérieures des parties de paroi radialement extérieures (5b, 6b) une largeur (B₁) comprise entre 4,0 mm et 20,0 mm, en particulier entre 6,0 mm et 15,0 mm.

12. Pneumatique de véhicule selon l'une quelconque des revendications 1 à 11, **caractérisé en ce que** la partie de paroi radialement extérieure (6b) incurvée de manière concave présente en vue de dessus à son endroit le plus large une extension de largeur (b₃) comprise entre 1,0 mm et 5,0 mm.

13. Pneumatique de véhicule selon l'une quelconque des revendications 1 à 12, **caractérisé en ce que** l'angle (α) selon lequel la rainure (2) s'étend en vue de dessus varie sur l'extension longitudinale de la rainure (2) de jusqu'à 15°, la rainure (2) s'étendant globalement en forme d'arc de cercle.

14. Pneumatique de véhicule selon l'une quelconque des revendications 1 à 13, **caractérisé en ce que** la rainure (2) se termine à l'intérieur de la nervure profilée (1) à la manière d'une rainure borgne.

15. Pneumatique de véhicule selon la revendication 14, **caractérisé en ce qu'**une rainure supplémentaire, moins inclinée vers la direction circonférentielle par rapport à la rainure (2) en vue de dessus, est adjacente à l'extrémité de la rainure (2) qui se trouve à l'intérieur de la nervure profilée (1).
